(19) Europäisches Patentamt

European Patent Office

Office européen des brevets

(11) Publication number: **0 365 801 B1**

## (12) EUROPEAN PATENT SPECIFICATION

(45) Date of publication of patent specification: **18.11.93**

(51) Int. Cl.5: **C01F 7/36**, B01J 21/04, C23C 20/06

(21) Application number: **89116449.3**

(22) Date of filing: **06.09.89**

The file contains technical information submitted after the application was filed and not included in this specification

(54) **Process for producing alumina with high specific surface area.**

(30) Priority: **06.09.88 JP 221448/88**

(43) Date of publication of application:
**02.05.90 Bulletin 90/18**

(45) Publication of the grant of the patent:
**18.11.93 Bulletin 93/46**

(84) Designated Contracting States:
**DE GB**

(56) References cited:
**EP-A- 0 177 198**
**EP-A- 0 197 686**
**FR-A- 2 624 405**
**JP-A-61 068 314**
**US-A- 4 387 085**

(73) Proprietor: **NISSAN MOTOR CO., LTD.**
**2 Takara-cho, Kanagawa-ku**
**Yokohama-shi Kanagawa-ken 221(JP)**

Proprietor: **The Agency of Industrial Science**
**and Technology**
**3-1, Kasumigaseki 1-chome**
**Chiyoda-ku Tokyo-to(JP)**

(72) Inventor: **Mizukami, Fujio**
**8-21, Karuya-cho 5-chome**
**Ushiku-shi Ibaragi-ken(JP)**
Inventor: **Maeda, Kazuyuki**
**402-607, Azuma 1-chome**
**Tsukuba-shi Ibaragi-ken(JP)**
Inventor: **Niwa, Shuichi**
**945-8, Onoraki**
**Tsukuba-shi Ibaragi-ken(JP)**
Inventor: **Mine, Junichi**
**37-2, Seya 5-chome**
**Seya-ku**
**Yokohoma-shi Kanagawa-ken(JP)**

(74) Representative: **Patentanwälte Grünecker,**
**Kinkeldey, Stockmair & Partner**
**Maximilianstrasse 58**
**D-80538 München (DE)**

EP 0 365 801 B1

**Description**

**BACKGROUND OF THE INVENTION**

Field of the Invention

The present invention relates to a process for producing alumina with a high specific surface area. More specifically, the invention relates to a process for producing alumina which maintains a high specific surface area at high temperatures and thus is suitable for use as a substrate or a support for a combustion gas or combustion exhaust gas purification catalyst or for a sensor subjected to substantially high temperatures.

Description of the Background Art

In modern technologies, one of the major objects to be achieved is environmental air purification. Corrective measures have been taken to reduce the emission to the atmosphere from mobile and stationary sources, such as, for example, automotive vehicles, power stations, fossil fuel burners and oil stoves. An effective emission control is often obtained by the use of a noble metal catalyst, such as, e.g., platinum (Pt) or rhodium (Rh), and to date, the normal substrates for these catalysts have been porous ceramics, either in pelleted or cellular monolithic form. Such ceramic substrates for supporting catalysts have gained greater acceptance in high-flow velocity operation due to the low pressure drop inherent in their configuration. However, the physical properties of these ceramic substrates are not ideal since they are relatively fragile and liable to thermal shock fracture. In order to improve such shortcomings in the ceramic substrate, various attempts have been made. For example, in Platinum Metals Review vol. 21, No. 3 (1977), A. S. Prautt and J. A. Caurns disclose Noble Metal Catalysts on Metallic Substrates. Prautt and Caurns have proposed the use of a catalyst supporting substrate formed of aluminium-containing ferric steel with an alumina surface coating.

On the other hand, SAE Technical Paper Series No. 850131, February 25 - March 1, 1985, by Manfred Nonnenmann, proposes Metal Supports for Exhaust Gas Catalysts. Nonnenmann discloses that, an exhaust gas catalyst designed for reducing the amount of pollutants emitted from motor vehicles consists essentially of:
- catalytically effective substances, such as, e.g., platinum or rhodium, embedded in
- a washcoat having a high specific surface area and applied to
- a support. This support determines the basic design of the catalyst, its mechanical characteristics and - by its geometric surface area - the catalytic action.

In the meantime the need of noble metals for use as catalysts is growing at a substantial rate due to the increasing number of automotive vehicles manufactured and marketed or number of emission sources, such as combustioning equipments, and, due to an increasing strictness for emission control. Since there are relatively small amounts of reserves of noble metals, a reduction of the use amount of noble metals for catalysts is an important object to be achieved. In order to achieve this, it is required to provide high performance noble metal/alumina catalysts. For obtaining high performance noble metal/alumina catalysts it is necessary to use an alumina substrate with a high specific surface area. Conventionally, alumina with a high specific surface area has been proposed. However, the noble metal/alumina catalysts in the prior art cannot solve the problem of a substantial reduction of the specific surface area at a high temperature. In the normal use of catalysts for automotive emission control, the catalysts are subjected to a high temperature exhaust gas in a temperature range of 600°C to 1100°C, more practically 850°C to 1100°C. The conventionally proposed noble metal/alumina catalysts do not satisfactorily permit a reduction of the amount of noble metal while maintaining a satisfactory emission control performance.

In order to improve this, Japanese Patent First (unexamined) Publication (Tokkai) Showa 60-226414 discloses alumina to which lanthanum oxide is added. On the other hand, in Chemistry Letters 1985, pp 151 to 154, it is proposed to add barium oxide to alumina for providing a specific surface area in the range of $85m^2/g$ to $125m^2/g$ even after baking at 1000°C.

On the other hand, as will be appreciated, when an exhaust gas purification catalyst is used in the automotive exhaust system or in a gas turbine, the conventionally proposed alumina substrate will not provide a sufficient specific surface area when subjected to a substantially high flow velocity of exhaust gas from the engine or turbine or caulking may be caused due to the use of fuel, such as aromatic compounds. Therefore, in order to obtain a satisfactorily high performance in air purification, a higher specific surface area has been required for the catalyst substrate. In order to attain this, the practically used metal substrate is formed of heat-resistive material, such as, e.g., mullite or cordierite and formed into a honeycomb

2

structure. The metal substrate is washcoated by a noble metal/alumina catalyst or coated onto a catalyst support and subsequently impregnated with a noble metal. During such a coating process additives, such as barium oxide and lanthanum oxide, are washed out (elute) from the composite alumina, making the coating process difficult. In addition, due to the liquation and coating operation, the purification performance of the catalyst tends to be degraded significantly.

JP-61-68314 relates to preparing porous $SiO_2$, $Al_2O_3$, $TiO_2$ or $ZrO_2$ by hydrolysis of organo-compounds in the presence of crosslinking coordinating compounds. Hexylene glycol is mentioned as a suitable crosslinking compound, specifically for the production of $SiO_2$.

## SUMMARY OF THE INVENTION

In view of the shortcomings in the prior art, it is the object of the present invention to provide a process for producing an alumina having a high specific surface area at a high temperature range.

In order to accomplish the aforementioned object, the present invention provides a process of producing alumina comprising the steps of:

(a) dissolving aluminium alkoxide in hexylene glycol (2-methyl-2,4-pentanediol);

(b) heating said mixture at a temperature in the range of 101°C to 200°C to produce a sol;

(c) hydrolyzing said sol to obtain a gel by adding water in an amount of less than or equal to 20 mol versus 1 mol of aluminium alkoxide;

(d) drying the obtained gel; and

(e) baking the dried gel at a temperature higher than or equal to 750°C.

Thus, the process of the present invention includes the step of dissolving aluminium alkoxide in hexylene glycol (2-methyl 2,4-pentanediol) and subjecting the solution to hydrolysis. The hydrolysis and the dehydrating condensation of the hexylene glycol is controlled by the alkoxide. This is important for obtaining alumina having a uniform porous structure with a high specific surface area.

According to a preferred embodiment of the invention, the hexylene glycol is present in an amount greater than or equal to 0.5 mol versus 1 mol of aluminium alkoxide and less than or equal to 5 mol versus 1 mol of aluminium alkoxide. Further preferably, the hexylene glycol is present in an amount less than or equal to 3 mol versus 1 mol of aluminium alkoxide.

The hydrolysis process is performed by adding water in amount of more than or equal to 0.5 mol versus 1 mol of aluminium alkoxide. Also, the hydrolysis process is performed by adding water in amount of less than or equal to 20 mol versus 1 mol of aluminium alkoxide. More preferably, water is added in an amount ranging from 2 mol to 10 mol versus 1 mol of aluminium alkoxide.

The aluminium alkoxide is selected from among aluminium methoxide, aluminium ethoxide, aluminium iso-propoxide, aluminium n-propoxide, aluminium n-butoxide, aluminium sec-butoxide and aluminium tert-butoxide.

The process may further include the step of putting said gel onto a support or impregnating a support with said gel and subsequently performing said drying and baking process.

## DETAILED DESCRIPTION OF THE INVENTION

In the process of producing alumina according to the present invention, the aluminium alkoxide is put into the hexylene glycol (2-methyl-2,4-pentanediol) to form a solution. The solution is then heated at a temperature in the range of 101°C to 200°C. The solution in the form of a sol is then subjected to hydrolysis to form a gel. The produced gel is dried and baked at a temperature higher than or equal to 750°C.

Generally, an aluminium ion may form a four-coordinated tetrahedral or a six-coordinated octahedral compound. Alumina is thus a high molecular compound produced by covalently bonding the compounds to one another at their apices, along their edges or across their faces by means of oxygen atoms or hydroxyl groups. Accordingly, alumina of various structures and various molecular weights can be produced depending on the kind and the structure of alumina hydroxide obtained by the hydrolysis process and on how the dehydrating condensation is allowed to proceed. Naturally, the specific surface area of alumina varies with its structure and molecular weight. Generally, a higher specific surface area can be obtained with alumina particles of smaller molecular weight, in other words the primary particle has a smaller grain size. Also, a tetrahedral structure will provide a higher specific surface area than an octahedral structure. However, when the grain size becomes excessively small, the surface energy and the number of non-bridged hydroxyl groups is increased. This may cause a simple fusion or a dehydrating fusion between adjacent particles as the temperature increases, thus lowering the specific surface area. On the other hand, when each particle includes an increased amount of aluminium having tetrahedral structure, the amount of non-bridged coordinated water or hydroxyl groups is increased for neutralization of the electric charge. This also causes a reduction of the specific surface area. Therefore, in order to obtain alumina with a high specific surface area at high temperatures it is required to appropriately adjust and control the hydrolysis process and the dehydrating polymerization process so as to obtain primary particles of alumina having an appropriate structure and molecular weight.

In view of this, according to the invention, the hydrolysis and the condensation of the aluminium alkoxide is controlled by hexylene glycol. Hexylene glycol has two hydroxyl groups and reacts with aluminium alkoxide in complex formation and ligand exchange, thereby forming a unidentate ligand of the aluminium ion with a single hydroxyl group or a chelate coordination or bridging coordination with two hydroxyl groups. Therefore, by blocking and bridging the coordinating points i.e. the apices of the tetrahedron and octahedron, the hydrolysis and the dehydrating polymerization of the aluminium alkoxide can be controlled. Thus, the isolation and gelation of the aluminium alkoxide can be controlled. As a result, alumina with uniform qualities and with a high specific surface area at high temperatures can be obtained.

According to the invention, it is possible to use any alkoxide to form aluminium alkoxide irrespective of the type of alkyl group. Furthermore, material which forms alkoxide easily in hexylene glycol, such as anhydrous aluminium halogenide can be used. Preferably, the aluminium alkoxide is selected among, e.g., aluminium methoxide, aluminium ethoxide, aluminium iso-propoxide, aluminium n-propoxide, aluminium n-butoxide, aluminium sec-butoxide and aluminium tert-butoxide in view of the costs and the processing ability.

As set forth above, since hexylene glycol acts not only as a solvent but also as an agent for controlling the reaction of aluminium alkoxide, the amount of hexylene glycol is preferably adjusted to be more than or equal to 0.5 mol versus 1 mol of aluminium alkoxide. Furthermore, as set forth above, the heating temperature for heating the solution of aluminium alkoxide and hexylene glycol (2-methyl 2,4-pentanediol) is in the range of 101°C to 200°C. On the other hand, when an excessive amount of hexylene glycol is used, an unacceptably large amount of organic compound remains even after the hydrolysis or the particle size becomes too small for causing fusion for lowering the specific surface area. Therefore, the maximum amount of hexylene glycol is 5 mol. Furthermore, it is preferred to limit the amount of hexylene glycol to less than or equal to 3 mol versus 1 mol of aluminium alkoxide. Generally, when a relatively small amount of hexylene glycol is used, it may be difficult to dissolve the aluminium alkoxide. In such a case, another solvent may be used. As this solvent, any type of solvent which can dissolve both the aluminium alkoxide and the hexylene glycol and which has a weaker coordinating ability to aluminium than hexylene glycol can be used. For example, monohydric alcohol, ethers and hydrocarbons may be used as solvent. On the other hand, if the heating temperature is too low the complex formation reaction and the ligand conversion of the aluminium alkoxide and the hexylene glycol becomes unacceptably slow. Furthermore, an excessively low heating temperature may make it difficult to cause the polymerization of the aluminium alkoxide with hexylene glycol as inclusion. Therefore, the temperature of the heating process is in the range set forth above.

The amount of water used in the hydrolysis process is closely related to the amount of the alumina particles to be produced and the specific surface area of alumina. When the amount of water used in the hydrolysis process is too small, the alumina gel may contain too large an amount of organic compounds after the drying process to make it easy to cause fusion during the high temperature baking process. On the other hand, an excess amount of water may create alumina particles of large molecular weight produced through the solation and gelation process for reducing the specific surface area. Therefore, the amount of water to be used in the hydrolysis process is preferred to be in the range of 0.5 mol to 20 mol versus 1 mol of aluminium alkoxide, and further preferably in the range of 2 mol to 10 mol. Water may be directly added, or, alternatively may be added diluted by an appropriate solvent.

In the process of the invention, after adding the water the solution is processed into gel form via sol form. It is possible to dry the obtained sol under reduced pressure in an ordinary process. Alternatively, it may also be possible to put the undried gel onto a honeycomb support or to impregnate a honeycomb support therewith and subsequently drying same under reduced pressure in an ordinary way. Therefore,the obtained gel can be dried in any way.

The temperature of the baking process is 750°C or above. It is possible to perform a pre-heating process before performing the baking process, at a temperature lower than 750°C. For the pre-heating process no specific conditions and atmosphere are required. Therefore, the pre-heating process can be performed under the atmosphere of, e.g., oxygen, nitrogen, hydrogen, argon or helium. Furthermore, for pre-heating, the range of the temperature is not specified and any temperature lower than or equal to 750°C can be used. Baking at a temperature of 750°C or above also does not require any specific conditions and can be performed under the atmosphere of air or oxygen. Furthermore, the processing time

4

of the baking process is not specified.

Through the process as set forth above, alumina having a high specific surface area at a high temperature can be obtained. Alumina produced by the process of the invention may maintain a satisfactorily high specific surface area for a long use period at a temperature of 1000°C. Furthermore, since alumina is formed into a gel by the hydrolysis process it is easy to put the gel onto a support or to impregnate a support therewith. In addition, since the dried gel contains a relatively large amount of hexylene glycol the hexylene glycol functions as a ligand in bonding same on the surface of a support without any additives.

In order to demonstrate the performance of the process according to the invention, experiments were carried out in accordance with the examples given below.

## EXAMPLE 1

In a beaker of 500 ml capacity, 120.1g of aluminium iso-propoxide (Al(OisoPr)$_3$) were put. To this, 108.3g of hexylene glycol were added. Then, the beaker was put into an oil bath of 120°C and was stirred for 4 h. Subsequently, the temperature of the oil bath was lowered to 100°C, and 90g of water were added to the melt of aluminium alkoxide. The beaker was kept overnight at a constant temperature of 100°C to obtain a gel. The obtained gel was transferred to an eggplant type flask and dried under a reduced pressure atmosphere at a temperature in the range of 120°C to 170°C. Thereby, 39g of dried gel was obtained. The obtained gel was heated at 300°C for 1 h and baked at 450°C, 600°C and 800°C, respectively, for 3 h to obtain a white alumina powder. No clear diffraction line could be observed in powder x-ray diffraction. The specific surface area of the produced alumina is shown in the appended table.

The alumina obtained in Example 1 was baked at 1030°C for 3 h. The alumina did not show a clear diffraction line in powder x-ray diffraction. On the other hand, the pore distribution measured by mercury pressurization, showed a sharp distribution having a peak at 110Å. This is evidence for the uniform grain size of the alumina produced. The resultant specific surface area is shown in the appended table.

## EXAMPLE 3

The alumina obtained in Example 2 was further baked at 1030°C for 45 h. The specific surface area of the resultant alumina is also shown in the appended table.

## EXAMPLE 4

In a beaker of 200 ml capacity, 60g of aluminium iso-propoxide (Al(OisoPr)$_3$) were put. To this, 27.5g of hexylene glycol were added. Then, the beaker was put into an oil bath of 120°C and stirred for 3 h. Subsequently, the temperature of the oil bath was lowered to 100°C, and 45g of water were added to the melt of aluminium alkoxide and left for 4 h. The content of the beaker was then transferred to an eggplant type flask and dried under a reduced pressure atmosphere at a temperature of 150°C. Thereby the dried gel was heated at 200°C and 300°C, respectively for 1 h, and subsequently baked at 450°C, 600°C and 800°C, respectively for 3 h to obtain a white alumina powder. No clear diffraction line could be observed in powder x-ray diffraction. The specific surface area of the produced alumina is shown in the appended table.

## EXAMPLE 5

The alumina obtained in Example 4 was further baked at 1030°C for 3 h. The alumina did not show a clear diffraction line in powder x-ray diffraction. On the other hand, the pore distribution measured by mercury pressurization showed a sharp distribution having a peak at 108Å. This is evidence for the uniform grain size of the alumina produced. The resultant specific surface area is shown in the appended table.

## EXAMPLE 6

In a beaker of 500 ml capacity, 120.4g of aluminium iso-propoxide (Al(OisoPr)$_3$) were put. To this, 108.4g of hexylene glycol were added. Then, the beaker was put into an oil bath of 145°C and stirred for 3 h. Subsequently, the temperature of the oil bath was lowered to 100°C, and 90g of water added to the melt of aluminium alkoxide. The beaker was maintained overnight at a constant temperature of 100°C to obtain a gel. The obtained gel was transferred to an eggplant type flask and dried under reduced pressure atmosphere at a temperature in the range of 120°C to 170°C. The obtained gel was heated at 300°C for 1 h, and baked at 450°C, 600°C, 800°C and 1030°C, respectively for 3 h to obtain a white alumina powder. No clear diffraction line could be observed in powder x-ray diffraction. On the other hand, the pore distribution measured by mercury pressurization showed a sharp distribution having a peak at 110Å. This is evidence for the uniform grain size of the alumina produced. The specific surface area of the produced alumina is shown in the appended table.

**EXAMPLE 7**

Except for the initial oil bath temperature, alumina was produced as in Example 6. In this example, the initial oil bath temperature was set at 190°C. The obtained alumina was non-crystallized $\gamma$-alumina. The uniformity of the grain size of the resultant alumina was confirmed through powder x-ray diffraction and pore distribution measurement. The specific surface area of the resultant alumina is shown in the appended table.

**EXAMPLE 8**

Except for the initial oil bath temperature, alumina was produced as in Exmaple 6. In this example, the initial oil bath temperature was set at 105°C. The obtained alumina was $\gamma$-alumina or alumina of a nearly amorphous structure. The specific surface area of the resultant alumina is shown in the appended table.

**EXAMPLE 9**

Except for the amount of the hexylene glycol, alumina was produced as in Exmaple 1. In this example, the amount of hexylene glycol was 150g. No clear diffraction line was observed in powder x-ray diffraction. The resultant alumina had a non-crystallized structure. The specific surface area of the obtained alumina is shown in the appended table.

**EXAMPLE 10**

Utilizing 142.2 g of aluminium sec-butoxide (Al(Osec-Bu)$_3$) as aluminium alkoxide, the same process as in Example 6 was performed. The resultant alumina was $\gamma$-alumina with a nearly amorphous structure. The specific surface area of the resultant alumina is shown in the appended table.

〈COMPARATIVE EXAMPLE IN PRODUCTION PROCESS〉

**COMPARATIVE EXAMPLE 1**

120g of aluminium iso-propoxide (Al(OisoPr)$_3$) and 100g of isopropanol were stirred together at 70°C for 4 h. Subsequently, 90g of water were added. Though the process was the same as that mentioned below, alumina was obtained. The specific surface area is shown in the appended table.

**COMPARATIVE EXAMPLE 2**

Alumina obtained through the foregoing Comparative Example 1, was baked at 1030°C for 3 h. The pore size distribution of the obtained alumina was measured by mercury pressurization. As a result, it was found that the distribution was in the range of 80Å to 1400Å having five peaks. From this, it was found that the particle size of the resultant alumina was not uniform. The specific surface area of this Comparative Example 2 is shown in the appended table.

**COMPARATIVE EXAMPLE 3**

Alumina produced from aluminium alkoxide and available from the market was baked at 1000°C for 48 h. The specific surface area of the resultant alumina is shown in the appended table.

**COMPARATIVE EXAMPLE 4**

201g of aluminium nitrate were dissolved in 250ml of water. To this, a solution produced by diluting 116 ml of aqueous ammonia with 100 ml of water, was added to cause the precipitation of aluminium hydroxide.

After several decantations, the solution was filtered and dried. Baking was performed by the same process as in Example 1. The specific surface area of the resultant alumina is shown in the appended table.

**COMPARATIVE EXAMPLE 5**

Alumina obtained in Comparative Example 4 was baked at 1030°C for 3 h. The resultant alumina had a pore size distribution in the wide range of 200Å to 1200Å. The specific surface area of the resultant alumina is shown in the appended table.

**COMPARATIVE EXAMPLE 6**

To 155.5g of a solution of aluminium nitrate, a solution of sodium aluminate was added until the pH of the solution reached 7. The resultant precipitate was filtered and washed until no more white preciptate was formed when a washing solution of barium nitrate was added. The precipitate was dried and baked by the same process as in Example 6. The pore distribution was in the wide range of 200Å to 1100Å. The specific surface area of the resultant alumina is shown in the appended table.

〈COMPARATIVE EXAMPLE IN SOLVENT〉

**COMPARATIVE EXAMPLES 7, 8, 9 AND 10**

In place of hexylene glycol in the foregoing Example 1, ethanolamine (Comparative Example 7), cyclohexane-1,4-diol (Comparative Example 8), pinacol (Comparative Example 9) and 3-methyl-1,3-butadiol (Comparative Example 10) were used, respectively. By the same process as in Example 1, dried gels were obtained. The gel was heated at 300°C for 1 h and subsequently baked at 450°C, 600°C, 800°C and 1000°C, respectively for 3 h. The respective specific surface areas are shown in the appended table. In the Comparative Examples 8 to 10, the respective alumina had a pore distribution in the range of 100Å to 500Å with 3 peaks. Therefore, these still have a wider distribution range in comparison with the examples according to the present invention.

〈COMPARATIVE EXAMPLE IN REACTION TEMPERATURE〉

**COMPARATIVE EXAMPLE 11**

145.4g of aluminium sec-butoxide (Al(Osec-Bu)$_3$) were dissolved in 108.5g of hexylene glycol. The solution was heated under stirring in an oil bath at a temperature of 98°C for 3 h. Then, 90g of water were added and left overnight. Subsequently, the same process as in Example 6 was performed to obtain alumina. Through powder x-ray diffraction it was found that the structure of the obtained alumina was similar to γ-alumina. The specific surface area is shown in the appended table.

**COMPARATIVE EXAMPLE 12**

121g of aluminium iso-propoxide (Al(OisoPr)$_3$) were dissolved in 108g of hexylene glycol. The solution was heated under stirring in an oil bath at a temperature of 80°C. Thereafter, 90g of water were added and left overnight. Subsequently the same process as in Example 6 was performed for obtaining alumina. The specific surface area of the resultant alumina is shown in the appended table.

As can be seen herefrom the alumina prepared in the examples according to the present invention exhibits a much higher specific surface area than the comparative examples.

**TABLE**

| Production Process | Final Baking Condition | | Specific Surface Area | Examples to be Compared |
|---|---|---|---|---|
| (Oil Bath Temp. °C) | Temp. °C | Time (h) | (m²/g) | |
| EXAMPLE 1 Invention (120) | 800 | 3 | 231 | Comp. 1 |
| EXAMPLE 2 Invention (120) | 1030 | 3 | 146 | Comp. 2, 7, 8, 9, 10, 11 |
| EXAMPLE 3 Invention (120) | 1030 | 48 | 100 | Comp. 3 |
| EXAMPLE 4 Invention (120) | 800 | 3 | 238 | Comp. 1, 4 |
| EXAMPLE 5 Invention (120) | 1030 | 3 | 138 | Comp. 11, 12 |
| EXAMPLE 6 Invention (120) | 1030 | 3 | 148 | Comp. 11, 12 |
| EXAMPLE 7 Invention (145) | 1030 | 3 | 141 | Comp. 11, 12 |
| EXAMPLE 8 Invention (190) | 1030 | 3 | 148 | Comp. 11, 12 |
| EXAMPLE 9 Invention (105) | 1030 | 3 | 137 | Comp. 11, 12 |
| EXAMPLE 10 Invention (120) | 800 | 3 | 226 | Comp. 11 |
| COMP. EXAMPLE 1 Invention (145) | 1030 | 3 | 138 | Exam. 1, 3, 9 |
| COMP. EXAMPLE 2 Precipitation (70) | 800 | 3 | 196 | Exam. 2, 6 |
| COMP. EXAMPLE 3 Marketed one | 1000 | 48 | 68 | Exam. 3 |
| COMP. EXAMPLE 4 Precipitation (Room) | 800 | 3 | 77 | Exam. 1, 3, 9 |
| COMP. EXAMPLE 5 Precipitation (Room) | 1030 | 3 | 21 | Exam. 2, 6 |
| COMP. EXAMPLE 6 Precipitation (Room) | 1030 | 3 | 63 | Exam. 2, 6 |
| COMP. EXAMPLE 7 Like Invention (120) | 1030 | 3 | 83 | Exam. 2, 6 |
| COMP. EXAMPLE 8 Like Invention (120) | 1030 | 3 | 115 | Exam. 2, 6 |
| COMP. EXAMPLE 9 Like Invention (120) | 1030 | 3 | 122 | Exam. 2, 6 |
| COMP. EXAMPLE 10 Like Invention (120) | 1030 | 3 | 121 | Exam. 2, 6 |
| COMP. EXAMPLE 11 Like Invention (98) | 1030 | 3 | 121 | Exam. 2, 6, 8 |
| COMP. EXAMPLE 12 Like Invention (80) | 1030 | 3 | 120 | Exam. 2, 6, 8 |

**Claims**

1. A process of producing alumina comprising the steps of:
   (a) dissolving aluminium alkoxide in hexylene glycol (2-methyl-2,4-pentanediol);
   (b) heating said solution to a temperature in the range of 101 °C to 200 °C to produce a sol;

(c) hydrolyzing said sol to obtain a gel by adding water in an amount of less than or equal to 20 mol versus 1 mol of aluminium alkoxide;

(d) drying the obtained gel; and

(e) baking the dried gel at a temperature higher than or equal to 750 °C.

2. The process as set forth in claim 1, wherein said hexylene glycol is present in an amount greater than or equal to 0.5 mol versus 1 mol of aluminium alkoxide.

3. The process as set forth in claim 2, wherein said hexylene glycol is present in an amount less than or equal to 5 mol versus 1 mol of aluminium alkoxide.

4. The process as set forth in claim 3, wherein said hexylene glycol is present in an amount less than or equal to 3 mol versus 1 mol of aluminium alkoxide.

5. The process as set forth in claim 1, wherein water is added in the hydrolysis step (c) in an amount of more than or equal to 0.5 mol versus 1 mol of aluminium alkoxide.

6. The process as set forth in claim 5, wherein water is added in an amount ranging from 2 mol to 10 mol versus 1 mol of aluminium alkoxide.

7. The process as set forth in claim 1, wherein said aluminium alkoxide is selected from aluminium methoxide, aluminium ethoxide, aluminium iso-propoxide, aluminium n-propoxide, aluminium n-butoxide, aluminium sec-butoxide and aluminium tert-butoxide.

8. The process as set forth in claim 1, which includes the step of putting said gel onto a support or impregnating a support with said gel and subsequently performing said drying and baking process.

**Patentansprüche**

1. Verfahren zur Herstellung von Aluminiumoxid, umfassend die folgenden Stufen:
   (a) Auflösen von Aluminiumalkoxid in Hexylenglykol (2-Methyl-2,4-pentandiol);
   (b) Erwärmen der Lösung auf eine Temperatur in dem Bereich von 101 °C bis 200 °C, um ein Sol herzustellen;
   (c) Hydrolysierung des Sols, um ein Gel zu erhalten, durch Zufügung von Wasser in einer Menge von weniger als oder gleich 20 Mol, pro 1 Mol Aluminiumalkoxid;
   (d) Trocknen des erhaltenen Gels;
   (e) Sintern des getrockneten Gels bei einer Temperatur von höher als oder gleich 750 °C.

2. Verfahren nach Anspruch 1, worin das Hexylenglykol in einer Menge von mehr oder gleich 0,5 Mol pro 1 Mol Aluminiumalkoxid anwesend ist.

3. Verfahren nach Anspruch 2, worin das Hexylenglykol in einer Menge von weniger als oder gleich 5 Mol pro 1 Mol Aluminiumalkoxid anwesend ist.

4. Verfahren nach Anspruch 3, worin das Hexylenglykol in einer Menge von weniger als oder gleich 3 Mol pro 1 Mol Aluminiumalkoxid anwesend ist.

5. Verfahren nach Anspuch 1, worin Wasser in der Hydrolysestufe (c) in einer Menge von mehr als oder gleich 0.5 Mol pro 1 Mol Aluminiumalkoxid zugefügt wird.

6. Verfahren nach Anspruch 5, worin Wasser in einer Menge von 2 Mol bis 10 Mol pro 1 Mol Aluminiumalkoxid zugefügt wird.

7. Verfahren nach Anspruch 1, worin das Aluminiumalkoxid ausgewählt ist aus Aluminiummethoxid, Aluminiumethoxid, Aluminiumisopropoxid, Aluminium-n-propoxid, Aluminium-n-butoxid, Aluminium-sec-butoxid und Aluminium-tert-butoxid.

**8.** Verfahren nach Anspruch 1, welches eine Stufe umfaßt, in der das Gel auf einen Träger aufgebracht wird oder ein Träger mit dem Gel imprägniert wird und anschließend das Trocknen oder das Sinterverfahren durchgeführt wird.

## Revendications

**1.** Procédé pour la préparation d'alumine comprenant les étapes de :
(a) dissoudre l'alcoolate d'aluminium dans l'hexylène glycol (2-méthyl-2,4-pentanediol) ;
(b) chauffer ladite solution à une température comprise entre 101°C et 200°C pour produire un sol ;
(c) hydrolyser ledit sol pour obtenir un gel en ajoutant de l'eau en une quantité inférieure à ou égale à 20 moles pour 1 mole de l'alcoolate d'aluminium ;
(d) sécher le gel obtenu ; et
(e) cuire le gel séché à une température supérieure à ou égale à 750°C.

**2.** Procédé selon la revendication 1, où ledit hexylène glycol est présent en une quantité plus importante que ou égale à 0,5 mole pour 1 mole de l'alcoolate d'aluminium.

**3.** Procédé selon la revendication 2, où ledit hexylène glycol est présent en une quantité inférieure à ou égale à 5 moles pour 1 mole d'alcoolate d'aluminium.

**4.** Procédé selon la revendication 3, où ledit hexylène glycol est présent en une quantité inférieure à ou égale à 3 moles pour 1 mole d'alcoolate d'aluminium.

**5.** Procédé selon la revendication 1, où l'eau est ajoutée à l'étape d'hydrolyse (c) en une quantité de plus de ou égale à 0,5 mole pour 1 mole d'alcoolate d'aluminium.

**6.** Procédé selon la revendication 5, où l'eau est ajoutée en une quantité comprise entre 2 moles et 10 moles pour 1 mole d'alcoolate d'aluminium.

**7.** Procédé selon la revendication 1, où ledit alcoolate d'aluminium est choisi parmi le méthoxyde d'aluminium, l'éthoxyde d'aluminium, l'isopropoxyde d'aluminium, le n-propoxyde d'aluminium, le n-butoxyde d'aluminium, le butoxyde secondaire d'aluminium et le butoxyde tertiaire d'aluminium.

**8.** Procédé selon la revendication 1, qui comprend l'étape de placer ledit gel sur un support ou d'imprégner un support dudit gel et, subséquemment, d'accomplir ledit procédé de séchage et de cuisson.